# EUROPEAN PATENT APPLICATION

(11) **EP 1 829 741 A1**
(43) Date of publication of application: **05.09.2007**
(21) Application number: 07425098.6
(22) Date of filing: 21.02.2007
(51) Int. Cl.: B60P 1/02, B60P 3/025, B62D 63/06, B60D 1/54

(54) **Towable mobile kiosk that can be converted in situ into a fixed kiosk**

(30) Priority: 01.03.2006 IT CL20060006
(71) Applicant: Marturana, Antonio, 92024 Canicatti' (IT)
(72) Inventor: Marturana, Antonio, 92024 Canicatti' (IT)

(57) **Abstract**

Mobile kiosk, set on a trailer which can be towed by any kind of motor vehicles fitted with a hook, that can be converted in situ into a proper fixed kiosk as the wheels, axle-shafts, drawbar, rear lights and number plate are fully retractable.

## Description

The technical field to which this invention is related is mechanics applied to kiosks, booths, etc. to be towed by motor vehicles (cars, trucks, buses, etc.) and to be converted, after reaching their location, into stable structures. After transport the lower part of the structure becomes perfectly flat; in fact the drawbar, wheels, number plate and rear lights are no longer visible as they are completely retracted.

After careful researches in the Italian and several foreign markets, I have realized that there are companies who produce mobile kiosk, but all these products have big limitations, due to (a) the drawbar, which is unaesthetic, encumbering and dangerous to customers and pedestrians; (b) the wheels, which are visible, although sometimes they are half-covered, and cause a heigth problem, as the floor upon which the owner of the kiosk works is most of times on top of them, and therefore too high above the customers. The problem gets worse when there is a fridge or sink between the owner and the customers. Another side not to be underestimated is design, as the above-mentioned parts are usually hidden. If fact, the drawbar cannot be removed, so it is used to house devices such as cooling engines, electricity-generating engines, etc. As for the wheels, a raised platform is usually placed before them. So, in order to make such mobile kiosks more appealing, designers use funny shapes or gaudy colours, with questionable results.

It follows that it would be useful to remove the drawbar, axles, wheels, rear lights and number plate. But this causes problems to the owner: first, the time necessary to carry out these operations; second, where to put the parts after they have been removed; third, in carrying out the operations the user would inevitably get dirty, which should be avoided, expecially if the owner has to deal with food.

To avoid these problems I have designed a kiosk on a special type of trailer, which can be towed by any kind of motor vehicle (car, truck, bus, etc.). After reaching the chosen location, it is converted into a proper kiosk, as all the parts of the trailer (axles, wheels, drawbar, rear lights, number plate, etc.) are fully retracted and actually hidden, which is an important feature for those who wouldn't have where to put those parts after unmounting them.

Moreover, thanks to the axle-shafts, it is possible to place the floor at an heigth of about 20 cm like in a bar, thus solving the problem of a typical mobile kiosk in which the floor is usually (80-100) cm. above the ground.

As the lower part of the trailer is perfectly flat, and no part of the axle juts out, it is possible to lay the structure on the ground using hydraulic jacks, thus converting it into a stable structure. The architectural designing of the kiosk is therefore easier, because there are no components that could compromise a good aesthetic result.

Another very important factor is that all the conversion phases are automatically operated by either electromechanical or oil-pressured devices, therefore the owner, by simply unscrewing 3 bolts inside the kiosk, can start their business.

The strong point of this type of structure is its mobility. In fact artisans, street traders, organizations can set up their stall in busy areas such as fairs, markets, holiday resorts, etc., allowing them to serve a large number of customers.

### Axle-shatfs and retractable wheels

This mechanism is achieved by a cylinder - fig. 13 (a), fig. 14 (a), fig. 15 (a) - joined transversally and above the 2 middle longitudinal frame members by means of 4 plates. Around the edges of this cylinder, in coaxial external position, there are 2 other cylinders, having a wider diameter, which can only rotate - fig. 13 (a). Each of these 2 cylinders, which rotate independently one from the other, is joined to one axle-shaft; the latter has a rubber suspension with hexagonal section - fig. 13 (b), fig. 14 (b), and its geometric axis is parallel to the axis of the external cylinder. An oil-pressured piston - fig. 14 (c) - is joined at right angles to the external cylinder and is hinged at its other end to the frame. When the piston is drawn out, the external cylinder rotates around the internal cylinder and lowers the wheels (driving position), when it is drawn in the wheels are moved up (parking position).

It is important to point out that in this system the rotation is not around the wheels axis, but around the above-mentioned external cylinder which, when it rotates, makes the axle-shaft rotate and lift, with the advantage of an actual net lowering of the frame of about 350-400 mm. This height is necessary to drive safely on uneven road surfaces and to park by pavements or sidewalks.

### Drawbar

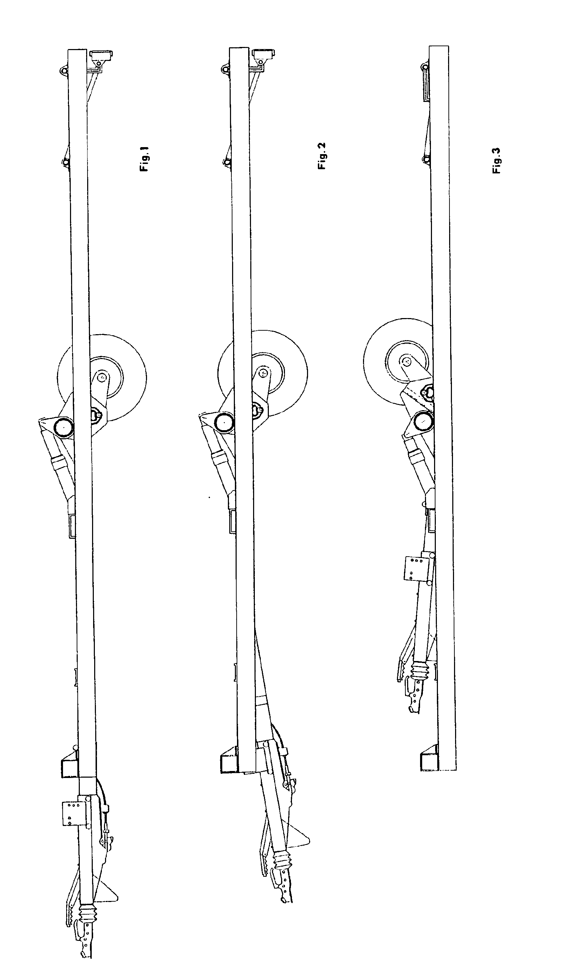

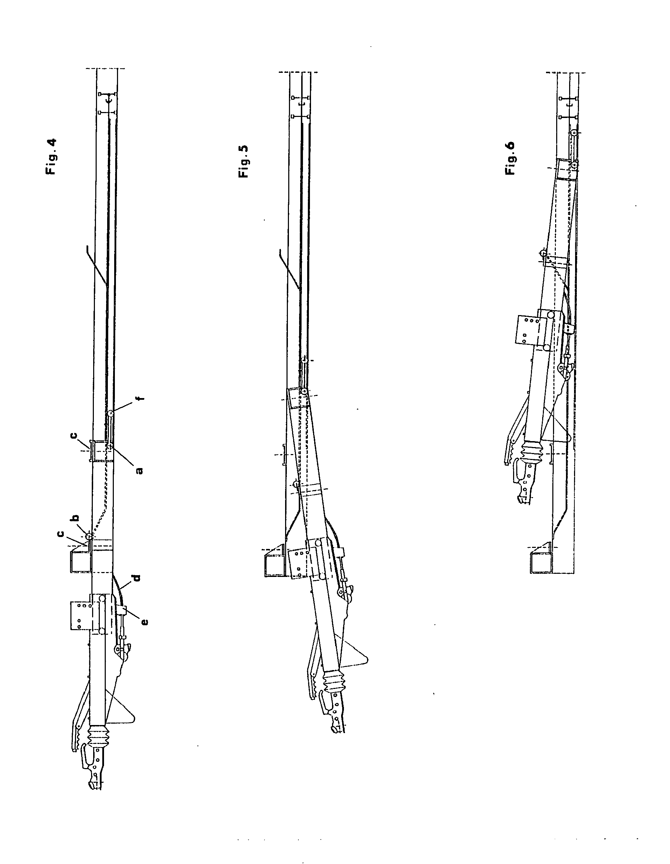

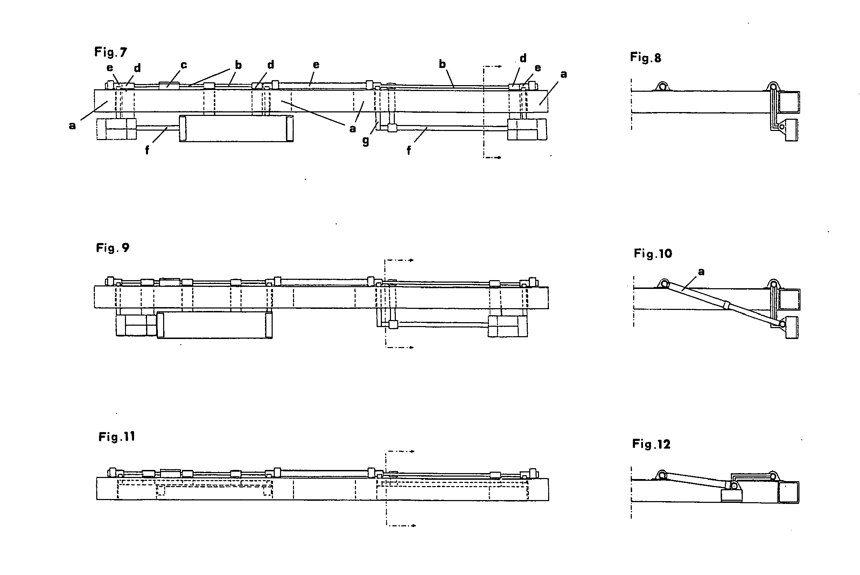

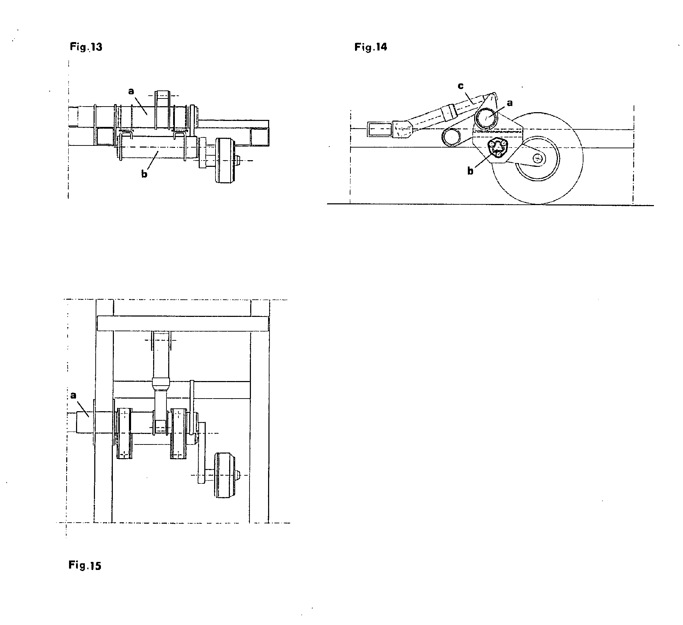

Also this part is fully retractable. The drawbar is made from a square section steel tube, to which are attached four small nylon wheels (2 on each side), which enable the drawbar itself to slide forward and backwards. The first couple of wheels - fig. 4 (a) - having the same imaginary axis, is located in the lower rear part (the plane of support of these wheels coincides to the plane of the bottom side of the drawbar), the second couple of wheels - fig. 4 (b) - is located in the upper part of the drawbar, at a distance of around 50 cm from the first. The lower back wheels run inside a couple of horizontal tracks, which constrain the wheels both at the top and at the bottom; the front ones instead run over a track having a shape which allows, after unscrewing the 3 bolts - fig. 4 (c ) - that fasten the drawbar to the frame, the following backwards movements of the drawbar (from driving to parking position)
1. during this phase (about 1-2 cm backwards), the drawbar keeps its horizontal position
2. between 2 to 25 cm backwards, the front part of the drawbar gradually lowers about 30 cm down, to allow the passing of the hand brake, stabilizer and wheel support
3. between 25 to 110 cm backwards, the drawbar keeps the height described in part 2
4. from 110 cm backwards, the front part of the drawbar gradually raises 40 cm up, ending 10 cm up to allow the housing of the staple.

All these movements may seem difficult to execute, but they are all carried out by simply pushing the drawbar backwards, either by hand or using an engine installed at the back of the drawbar itself. Obviously, the opposite movements are carried out by pulling the drawbar out, from parking to driving position.

In the front of the drawbar there is the repulsion brake, which brakes the trailer by means of a rigid steel rod that is usually placed underneath the drawbar. In our case the lower part of the frame is very near to the ground, so this solution is not recommended, and instead of the rigid steel rod I preferred to use a flexible steel cable - fig. 4 (d) - which is located inside the drawbar. The first lock for the sheathing - fig. 4 (e) - is located externally by the eyelet of the repulsion brake, behind that (5-6 cm) there is a loop which allows the sheathing inside the drawbar with a gentle curvature. Less than 5 cm from the back edge of the drawbar there is another lock for the sheathing (not if figure), out of which comes (about 10-15 cm) the flexible steel cable; a rigid steel rod 1,15 mt long is joined to this end of the cable.

The movement of the drawbar is not horizontal, therefore it is necessary that the rigid steel rod moves horizontally, by constraining it between 2 vertical eyelets with transversal circular section, to make its running easier. While the eyelet at the back (not if figure) keeps its position, the other must follow the drawbar, keeping its vertical position. To achieve this, a small trolley is made by adding 2 more wheels - fig. 4 (f) - at the back of the drawbar; the wheels of this trolley run inside the horizontal tracks and the trolley follows the drawbar backwards and forwards always keeping a horizontal position. The other eyelet is vertically soldered on this trolley, ensuring the horizontal running of the rigid steel rod. To prevent the rod from going inside the drawbar while the latter moves backwards, it is necessary to place an elastic band between the head of the rod and the trolley; however the elastic band must not be strong to avoid iterference in the action between the cable and the repulsion brake.

### Retractable rear lights and number plate

Authorities regulations in several countries provide that, in order to show the size of the trailer, rear lights must be placed on the edges, while the number plate must be in the middle. As the aim I want to achieve is to retract them completely when parked, I could not simply fold them towards the bottom of the trailer, as the folding of the rear lights would be blocked by the side longitudinal frame members of the trailer - fig. 7 (a) - and the folding of the number plate would be blocked by the midlle longitudinal frame members of the trailer - fig. 7 (a). Therefore it is necessary to shift the rear lights towards the middle by a length equal to the length of the longitudinal frame members of the trailer plus the play and shift the number plate towards the left (in our case). To achieve this aim it is necessary to place by the rear cross-bar of the trailer, above both the side and the middle longitudinal frame members, 2 threaded coaxial bars different in length but able to spin at the same pitch in opposite directions; the longest bar - fig. 7 (b) - operates the shifting of the rear ligths and number plate. The threaded bars are spun by an electric engine - fig. 7 (c ) - with automatic end run. The shifting of each component (rear light or number plate) in achieved by 2 nuts soldered on the inside edges of a tube about 6-8 cm long - fig. 7 (d); to the latter is also soldered a rigid plate onto which, in turn, is installed the rear light or number plate.

The threaded bars should be greased and protected from dust and mud by extendable rubber cylinders (not shown in the figure), fastened by hose clamps to the above-mentioned tubes.

The turning downwards of the rear lights and number plates is operated by 3 upper tubes - fig. 7 (e), coaxial and external to the threaded bars. The length of the upper middle tube - fig. 7 (e) - is equal to the overall dimensions of the 2 middle longitudinal frame members, plus 0.5 cm play on each side, plus the necessary room to solder a bar - fig. 7 (g) - to each end. The upper middle tube is hinged to the 2 middle longitudinal frame members; each bar at the ends of the upper middle tube is in turn soldered, at right angles, to a separate lower side tube - fig. 7 (f); each upper side tube - fig. 7 (e) - 5-6 cm long, is hinged to a side longitudinal frame member, and soldered to a bar to which in turn is soldered the edge of the lower side tube.
The part thus obtained has 2 cradles whose lower parts swing. Behind each rear light and the number plate there is a ring whose inside is nylon-covered and runs along the lower tube. One of the lower tubes overturns one rear light and the number plate, the other tube overturns the other rear light and the arm of the actuator which draws in (parking position) and out (driving position) the rear lights and number plate.

## Claims

1. By adopting a particular type of trailer and retractable components operated by either electromechanical or oil-pressured devices, this mobile kiosk, when parked, is converted into a fixed structure (fig. 3), as in parking position it fully houses and hides components such as axle-shafts, wheels, drawbar, rear lights and number plate, while in driving position all the above-mentioned components are automatically drawn out (fig. 1).
Therefore I claim as mine the solution to the
CONVERSION A KIOSK (or similar structures) FROM FIXED TO MOBILE AND VICEVERSA.

2. By adopting a cylinder - fig. 13 (a), fig. 14 (a), fig. 15 (a) - located transversally and in the middle of the 2 middle longitudinal frame members of the trailer, and 2 other cylinders placed around the edges of the first cylinder in coaxial external position, the independent rotation of the 2 external cylinders is obtained. Each of the external cyliders is parallel joined to one axle-shaft - fig. 13 (b), fig. 14 (b) - and is joined at right angles to an oil-pressured piston which, when drawn in, lifts up both wheel and axle-shaft, therefore obtaining an actual lowering of about 350 - 400 mm.
Therefore I claim as mine the solution to rotate the axle-shaft around the cylinder obtaining the
RETRACTION OF THE AXLE-SHAFT AND WHEELS (2, 4, etc. depending on the load), BOTH IN THIS KIND OF STRUCTURE AND IN TRAILERS.

3. The drawbar is fastened to the frame by 3 bolts - fig. 4 (c) - and, after unscrewing them, can be moved backwards. By adopting 4 small nylon wheels - fig. 4 (a) (b) - which run on special-shaped tracks it is possible to retract and lower the drawbar, to allow the passing of the hand brake and stabilizer; once the drawbar has been pushed inside the trailer, it moves up to allow the housing of the staple.
By adopting a sheathing inside the drawbar, and a small trolley at the back that keep an eyelet in a vertical position, the rod of the repulsion brake always keep a horizontal position indepedent from the position of the drawbar.
Therefore I claim as mine the solution to the
RETRACTION OF THE DRAWBAR AND REPULSION BRAKE, BOTH IN THIS KIND OF STRUCTURE AND IN TRAILERS.

4. Rear lights and number plate are retractable, as in parking position are housed in a small compartment underneath the frame. In order to do so is necessary to shift the rear lights towards the middle, which is achieved by 2 coaxial threaded bars. Each component shifts by means of 2 nuts screwed on the threaded bar joined toghether by a tube onto which is soldered a plated which holds the ligths or the number plate.
The folding is achieved by 3 tubes, coaxial and external to the threaded bars. The middle tube is longer and hinged to the middle longitudinal frame members, the side tubes are shorter and hinged to each of the side longitudinal frame members. The 3 tubes are joined by 2 U-shaped components, which swing and fold inside the rear lights and number plate. One of the U-shaped components is joined to the actuator which actually raises of lowers simultaneously the rear lights and the number plate.
Therefore, I claim as mine the solution to the
FOLDING AND RETRACTION OF THE REAR LIGHTS AND NUMBER PLATE UNDER THE FRAME, BOTH IN THIS KIND OF STRUCTURE AND IN TRAILERS.
